# EUROPEAN PATENT SPECIFICATION

(11) **EP 1 459 906 B1**
(45) Date of publication and mention of the grant of the patent: **16.08.2006**
(21) Application number: 03425166.0
(22) Date of filing: 18.03.2003
(51) Int. Cl.: B60B 1/04

(54) **Spoked wheel for a bicycle**
Speichenrad für ein Fahrrad
Roue à rayons pour bicyclette

(43) Date of publication of application: 22.09.2004
(73) Proprietor: Campagnolo Srl, 36100 Vicenza (VI) (IT)
(72) Inventor: Passarotto, Maurizio, 45100 Rovigo (IT); Meggiolan, Mario, 36051 Creazzo (Vicenza) (IT)
(74) Representative: Castiglia, Paolo

(56) References cited:
- EP-A- 1 201 458
- US-A1- 2002 074 853

## Description

The present invention relates to a spoked wheel for a bicycle, of the type which comprises a hub, a rim, and a plurality of spokes that connect the hub to the rim.

Recent years have witnessed an increasing development of studies and researches aimed at identifying new configurations of spoked wheels for bicycles capable of leading to better performances of the wheel, as well as of creating an original and innovative aesthetic effect.

On a strictly technical plane, especially in the field of spoked wheels for road racing bicycles, the research has been aimed at identifying solutions that are optimal both from the point of view of weight reduction, which is increasingly emphasized in said sector, and from the point of view of the static and dynamic stability of the wheel, as well as from the standpoint of the structural strength and in particular of the reduction in the risks of failure of the spokes of the wheel.

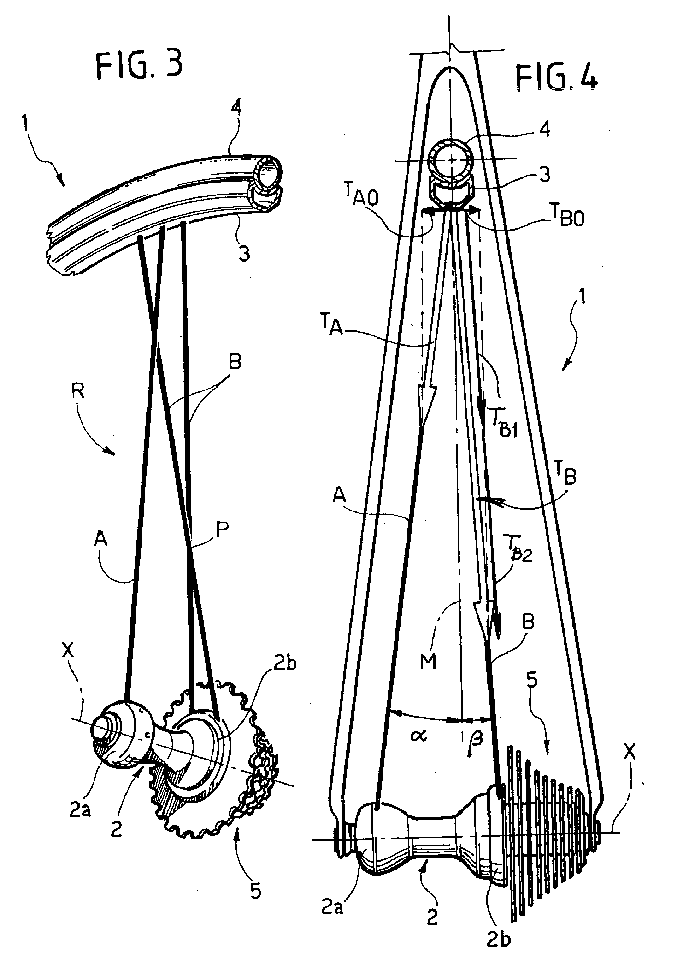

In wheels of the above type, the spokes must provide a substantial contribution to the achievement of all the aforesaid aims. It is, in fact, the spokes that contribute to a large extent to maintaining a static and dynamic stability of the wheel in any condition of use of the bicycle. Further in rear wheels, the spokes are the elements responsible for performing the important function of transmitting the driving torque from the hub of the wheel, on which one or more sprockets are mounted which are engaged selectively by the drive chain of the bicycle, to the rim of the wheel. Said torque transmission must occur with the maximum possible efficiency, and hence with minimum deformations, in order not to dissipate the energy exerted on the pedals by the cyclist. Finally, such results must be achieved with the minimum weight possible and without, however, incroducing risks of failure in the wheel spokes. From this standpoint, a particularly critical factor is the tensioning to which the spokes are subjected already at the moment of the wheel assembly. One of the purposes of said tensioning is to guarantee that the rim will always remain "centred", i.e., it will not shift away from a median plane of the wheel orthogonal to the axis of the hub and equidistant from the ends of the hub itself. For this purpose, the spokes of a typical spoked wheel include a first set of spokes on one side of the wheel, connected to a first portion of the hub, and a second set of spokes on the other side of the wheel, connected to a second portion of the hub, set at an axial distance from the first portion. Consequently, the spokes on the two sides of the wheel have an inclination or camber angle with respect to the median plane of the wheel, which causes the spokes tensioning to give rise to components of force in the direction parallel to the axis of the wheel, which are used for keeping the rim in the centred condition on said plane in any condition of operation. Of course, this problem becomes critical in wheels where the spokes on the two sides of the wheel present different camber angles. This is typically the case of the rear wheel, where the wheel hub carries, at one end, the sprockets cassette, so that the spokes set on the side of the wheel bearing the sprockets cassette have inclinations that are considerably smaller than the inclination of the spokes on the other side. Obviously, said spokes with smaller inclination must be more tensioned than the spokes on the other side in order to guarantee the centred position of the rim, and said higher tensioning gives rise to a greater risk of failure of the individual spoke itself. Further indications on this problem will be provided in greater detail in what follows, with reference to Figure 4 of the annexed drawings. The problem of a different camber angle of the spokes on the two sides of the wheel does not exist only for rear wheels. It exists in general in any wheel, either rear or front, the hub of which is partially occupied, for instance, by the disk of a disk brake.

In order to solve the above mentioned problems, the applicant has already proposed and developed (see European patent application No. EP-A-1 201 458) a spoked wheel for a bicycle, which, on the one hand, guarantees that high technical characteristics and performances may be obtained, and, on the other hand, leads to a wheel presenting an innovative and original aesthetic aspect. In said known wheel, the spokes that connect the hub to the rim are arranged in sets of three. Each set of three is made up of a spoke connected to a first portion of the wheel hub, and of two spokes connected to a second portion of the hub, which is set at an axial distance from the first portion. In the preferred solution, the spoke connected to the aforesaid first portion of the hub, viewed in the direction of the axis of the wheel, is set at the centre between the two remaining spokes of the set and extends in a radial direction with respect to the centre of the wheel. The two spokes connected to the second portion of the hub are, instead, when viewed once again in the direction of the axis of the wheel, arranged substantially parallel one to the other or slightly divergent or convergent.

US patent application No. 2002/0074853 discloses a plurality of spoked bicycle wheels having an unequal number of spokes on their sides, but a practically equal or exactly equal average tension of the spokes. Some embodiments illustrated therein show a wheel with spokes crossing over one another, other embodiments show a wheel with spokes arranged in groups.

European patent application No. 0 039 021 faces the problem of providing a spoked wheel for two-wheeled vehicles, especially for motor-cycles, having a remarkably increased number of spokes and discloses a wheel with spokes arranged in groups wherein spokes cross over one another.

Japanese patent application No. 11 321 201 discloses a spoked bicycle wheel wherein the spokes are arranged in groups and in each group pairs of spokes connected to opposite axial portion of the hub cross over one another.

Studies and experiments carried out by the applicant have, however, led to identification of the need to develop a new solution for further improving the wheels of the prior art.

A purpose of the present invention is therefore to realize a wheel of the type indicated at the beginning of the present description, which will be able to overcome, in an optimal way, all the technical problems that have been discussed above.

Another purpose of the present invention is to realize a wheel of the above indicated type which is suited for assuming various possible configurations.

Finally, a further purpose of the present invention is to realize a wheel of the above indicated type that will lead to an innovative and original aesthetic result, such as to give to the wheel itself an unmistakable aspect.

In order to achieve these and further purposes, the subject of the invention is a spoked wheel having the characteristics specified in the annexed Claim 1. Further advantageous characteristics of the spoked wheel according to the invention are specified in the dependent claims annexed hereto.

Tests carried out by the applicant on wheels made accordingly with the characteristics above specified have shown that said wheels offer optimal technical performance from every point of view. At the same time, as will clearly emerge from the annexed drawings, the invention gives to the wheel an innovative and original aesthetic appearance, which is altogether unmistakable as compared to the panorama of spoked wheels up to today realized.

Further characteristics and advantages of the invention will emerge from the following description with reference to the annexed drawings, which are provided purely by way of non-limiting example and in which:
- Figure 1 illustrates a first embodiment of the wheel according to the invention, viewed in the direction of the axis of the wheel;
- Figure 2 illustrates a variant of the wheel of Figure 1;
- Figure 3 is a perspective view, at an enlarged scale, of a detail of the wheel according to the invention, in the case of application to a rear wheel of a bicycle;
- Figure 4 illustrates a view of the wheel of Figure 3, in a plane containing the axis of the wheel, in which the fork of the bicycle frame on which the wheel is mounted is also illustrated;
- Figure 5 is a partial perspective view of a wheel according to the invention, in the case of application to a front wheel; and
- Figure 6 is a variant of the wheel of Figure 3, which refers to the case where the spokes of the wheel are arranged in groups which are set at a distance apart from one another, each group being made up of five spokes, instead of three spokes as in the solutions illustrated in the previous figures.

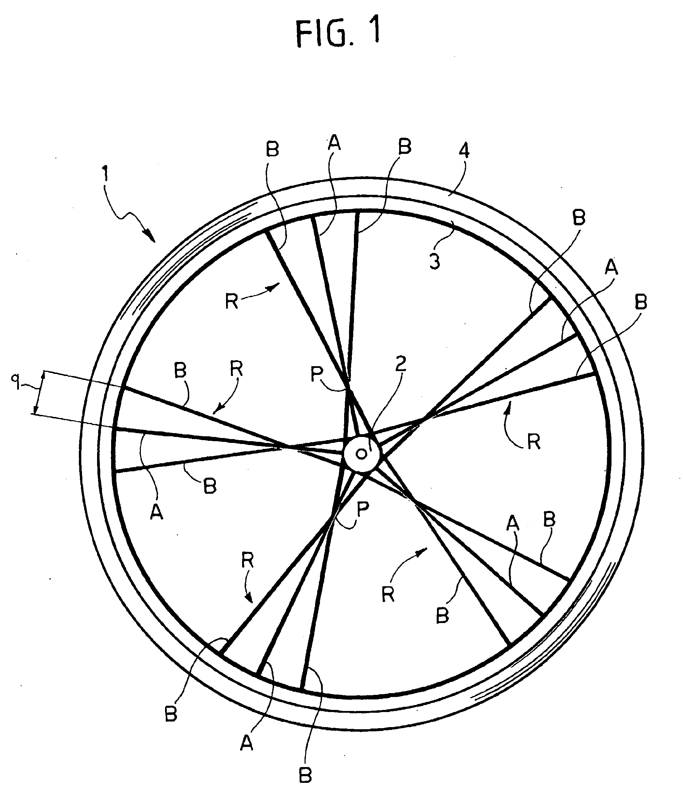

With reference to Figures 1, 3 and 4, the reference number 1 designates as a whole a bicycle wheel, which comprises a hub 2, a rim 3 on which is destined to be mounted a tyre 4, and a plurality of spokes which connect the hub 2 to the rim 3.

The present description will not go into any detail of the structure and conformation of the hub 2 and of the rim 3, since these elements may be obtained in any known way and since the structure of said components, taken in itself, does not fall within the scope of the present invention. Likewise, not illustrated in detail is the way in which each spoke is connected, at one end, to the hub 2 and, at the other end, to the rim 3. Any already existing technique suitable for this purpose can be used. On the other hand, the elimination of said constructional details from the drawings makes the latter easier and faster to understand.

Figures 3 and 4 refer to an application of the invention to a rear bicycle wheel, in which a sprockets cassette 5 is associated to the hub 2, said cassette being made up of a plurality of sprockets designed to engage selectively the drive chain of the bicycle in a way per se known.

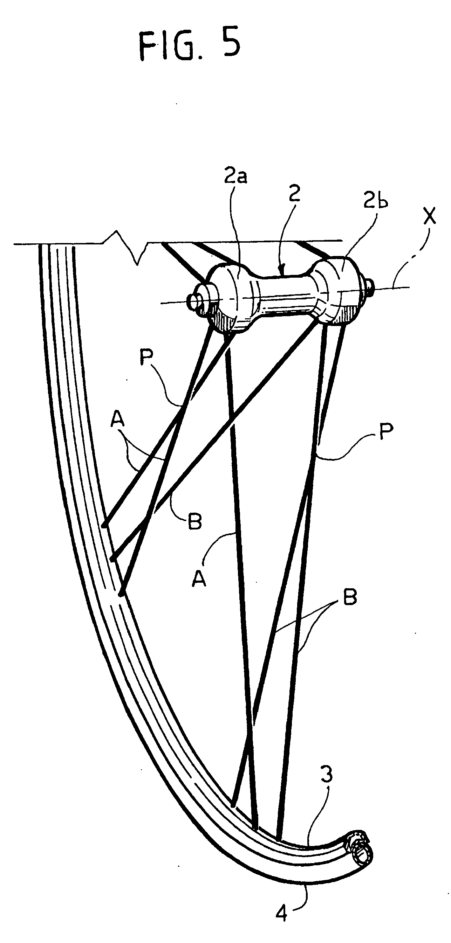

As it will be clarified in what follows, however, a spoked wheel presenting the geometry illustrated in Figure 1 may be applied both as a rear wheel (see Figures 3 and 4) and as a front wheel (see Figure 5).

The spokes that join the hub to the rim of the wheel according to the invention are arranged in a plurality of groups R. In the present description, by "group of spokes R" is to be meant a plurality of spokes A and/or B grouped together in such a way that the maximum distance (or chord) on the rim 3 between two adjacent spokes of the group is smaller than the distance (or chord) on the rim 3 between two different groups. In the case where all the spokes of the group are set at equal distances apart from one another by a pitch q, the distance (or chord) on the rim 3 between two groups is greater than said pitch q. In the case of the solution illustrated in Figures 1 to 5, each spokes group R is made up of a set of three spokes. As may be clearly seen from Figure 3, in each set of three spokes R one spoke A is foreseen, which is connected to one end 2a of the hub 2, and a couple of spokes B, which are connected to a portion 2b of the hub 2, adjacent to the sprockets cassette 5 and set at an axial distance from the end 2a.

Once again in the case of the preferred embodiment illustrated, the spoke A, viewed in the direction of the axis of the wheel, i.e., as it may be seen in Figure 1, is set in a radial direction, lying in a radial plane containing the axis X of the wheel.

The two spokes B, instead, are arranged in such a way that they cross over one another. Once again with reference to the preferred embodiment, since the spokes are oriented, when viewed as in Figure 1, in a specular manner, i.e., with angles of inclination that are equal and opposite with respect to the spoke A, they cross over one another at a point P (again as viewed in Figure 1), which lies on the central spoke A.

Of course, it is possible that the spoke A will not be contained in a radial plane and that the two spokes B will present different inclinations and will therefore cross over the spoke A, as viewed in Figure 1, at different points. It is also possible that the two spokes B will have distances (or chords) on the rim 3 different from the spoke A. Finally, it is also possible that only two spokes of each set of three spokes R will cross over one another.

In the case of application to a rear wheel, the sets of three spokes R are all oriented so as to have the two spokes B on the side of the wheel on which the sprockets cassette 5 is located, and the central spoke A on the opposite side of the wheel. Consequently, the wheel according to the invention, if used as a rear wheel, comes to have a number of spokes on the sprockets side twice the spokes on the opposite side.

Said arrangement leads to important advantages from the point of view of the structural strength of the wheel and in particular of the resistance to failure of the spokes, for the reasons that are illustrated in what follows.

For a rear wheel (see Figure 4), the presence of the sprockets cassette 5 at one end of the hub 2 means that the spokes B set on said side of the wheel will have an inclination β with respect to the median plane M of the wheel that is considerably smaller than the inclination α of the spokes A set on the other side. The median plane M is defined as the plane orthogonal to the axis X of the hub that is equidistant from the ends of the hub.

As it is known, each spoke of the spoked wheel is mounted and applied with a given tensile force. In Figure 4, T_{A} and T_{B} designate the components of the tensile forces applied to the spokes of each set of three spokes in the plane of the figure. T_{A} is the force which, in each set of three spokes, just the spoke A exerts on the rim 3 in the plane of the figure. T_{B} is the force resulting from the sum of the forces T_{B1} + T_{B2} that the spokes B of each set exert altogether on the rim 3. T_{B1} and T_{B2} are in general equal to one another, but could also be different. The components of the two forces T_{A}, T_{B} in a direction parallel to the axis X of the wheel are designated by T_{AO} and T_{BO} in Figure 4.

In the wheel according to the invention, the components T_{AO} and T_{BO} balance one another, so as to keep the rim 3 in the plane M. It follows that the resultant T_{B} must be greater than T_{A} on account of its smaller inclination. To be precise, the ratio between the tensile force T_{A} of the single spoke A and the tensile force T_{B}, which is the sum of the two tensile forces of the spokes B, T_{B1} and T_{B2} (of course always considering the tensile forces in the plane of Figure 4) is equal and opposite to the ratio of the sines of the angles of inclination α and β. Said condition applies, in general, to each set of three spokes of the wheel according to the invention and hence applies, as a whole, with reference to the total tensile forces of the spokes set on one side and on the other side of the wheel. It may also happen that the tensile forces of each set of three spokes are not perfectly balanced with one another and that the individual set will present a certain degree of unbalancing or, in other words, that in the wheel there will be a local unbalancing. In this case, the other sets of three spokes of the wheel present complementary degrees of unbalancing so as to ensure that the total tensile forces of the wheel will be balanced with respect to one another. It is moreover obvious that all the aforesaid considerations apply in the hypothesis that the spokes all substantially have the same cross section, but that the invention is not limited to this case.

In view of what has been said above, it results evident that the spokes arrangement according to the invention leads to important advantages. First of all, since the tensile force T_{B} is the resultant of the tensile forces of two spokes (T_{B1} and T_{B2}), the tensile force of each spoke B is substantially half T_{B}. Consequently, this means that each spoke B may present a tensioning that is substantially halved with respect to what would be necessary in the case of a conventional wheel, which envisages a single spoke B.

Furthermore, it is important to note that, in the case of a typical rear wheel, the ratio between the sine of β and the sine of α is approximately of 1:2, which means that in the balanced condition of the rim, T_{B} is approximately twice T_{A} and that hence each spoke B may be tensioned with a tensile force which is considerably less than the one that it would have if there were one single spoke and which substantially approaches the tensile force of the spoke A. In other words, thanks to the invention, when the components of the tensile forces of the spokes in radial planes containing the axis of the wheel are considered, all spokes come to have tensile forces that are very close to one another, even equal.

Of course, the balance condition of the tensile forces of the spokes of each set of three spokes exists also in a plane orthogonal to the axis X of the wheel, i.e., in a plane like the one illustrated in Figure 1. In this plane, the components of the tensile forces of the spokes B of each set of three spokes R in a tangential direction orthogonal to the rim are substantially balanced with respect to one another.

Furthermore, even though the invention leads to the particular advantages above discussed in the case of a wheel with spokes having different camber angles on the two sides (as, precisely, a rear wheel of the type described, because of the presence of the sprockets cassette, or as any wheel, whether this be a front or a rear wheel, because of the presence, for instance, of the disk of a disk brake), the invention may in any case be applied also to a wheel with spokes having equal camber angles on the two sides (typically a front wheel).

At the same time, the configuration above described gives to the wheel, whether this be a front or a rear wheel, when this is viewed in the direction of its axis (see Figure 1), an innovative aesthetic appearance, which is original and altogether unmistakable.

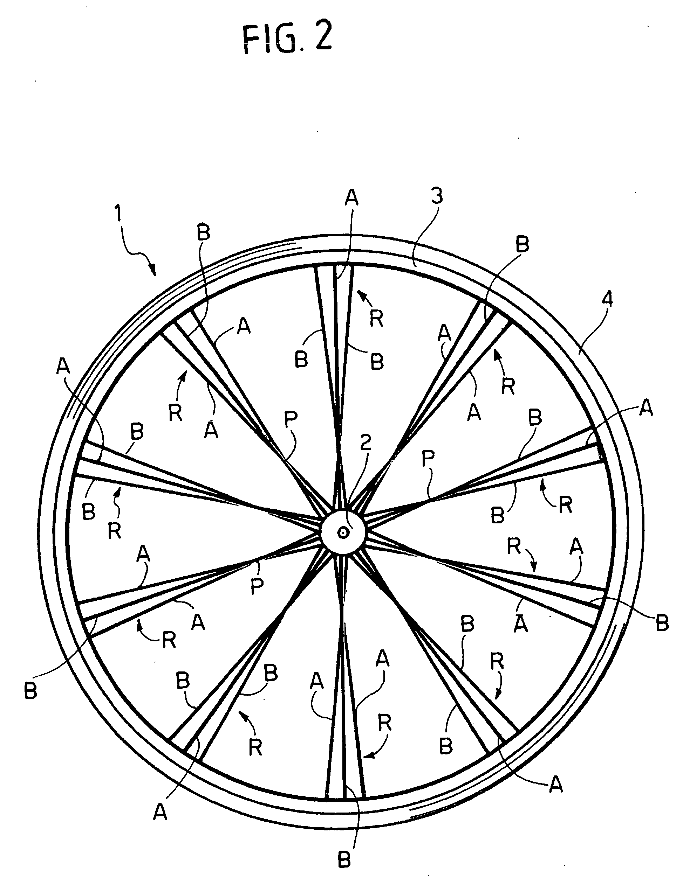

Figure 2 illustrates a variant in which the sets of three spokes foreseen in the wheel are ten, instead of five, as in the case of Figure 1. Obviously, however, the number of the sets of three spokes may be varied at will.

Figure 5 illustrates a further variant in which the wheel according to the invention is used as a front wheel. In this case, the sets of three spokes basically have the same configuration as the one illustrated in Figure 1, if viewed in the direction of the axis of the wheel. However, the sets of three spokes are alternately oriented with their central spoke connected once (A) on one side (2a) of the hub 2 and once (B) on the other side (2b). Likewise, the double spokes are connected once (B) on the side (2b) of the hub 2 and once (A) on the other side (2a) of the hub. Said sets of three spokes are, moreover, preferably even in number in such a way that the front wheel will have an identical number of spokes on either side. To this regard, the wheel illustrated in Figure 2 represents a front wheel, with sets of three spokes alternately oriented in the way described so as to have 15 spokes on each side, but it could also be a rear wheel, with 10 spokes A arranged all on one side of the wheel, and 20 spokes B arranged on the other side.

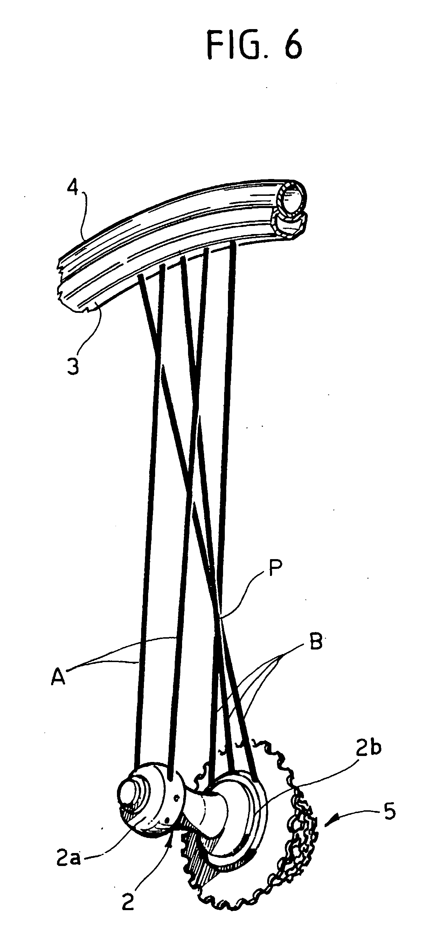

Figure 6 illustrates a further example of application of the concepts of the present invention. This figure is a variant of Figure 3 and illustrates the case where each group R of spokes is made up of five spokes. Within each set of five spokes, two spokes A are connected to the end 2a of the hub and are set substantially parallel to one another, whereas three spokes B are connected to the portion 2b of the hub and cross over one another at a point P. Obviously, also as regards the number of the spokes making up each group of spokes, there is large freedom of choice for the designer. In addition, it would also be possible to foresee a solution like the one illustrated in Figure 6, where also the two spokes A are set crossing over one another, or again a solution in which the spokes A cross over one another and the spokes B are set substantially parallel to one another.

All the considerations above developed with reference to balancing of the spokes tensile forces obviously apply also in the latter case. In the case of a wheel with different camber angles on the two sides, the number of spokes that make up each group of spokes may be chosen in such a way as to obtain a tensioning of all the spokes of the wheel that is substantially uniform. For instance, a similar result could be achieved with a solution of the type illustrated in Figure 6, should the ratio between the sines of the two camber angles be close to 3:2. To follow this criterion, each group of spokes can be made up of a number *m* of spokes on one side of the wheel and of a number *n* of spokes on the other side of the wheel which are in a ratio of *m*/*n* as close as possible to the inverse ratio of the sines of the camber angles of the respective two sides of the wheel. In addition, since the numbers *m* and *n* of spokes must be integers, perfect balancing of the tensile forces in each group of spokes may be obtained by varying the tension of each individual spoke. However, it is evident that also in this case the tensile forces of the individual spokes are far more homogeneous with respect to one another than in the case of known wheels, which have an equal number of spokes for both the camber angles.

In general, it is not excluded any other criterion of choice of the number of spokes in each group, nor it is excluded the case of groups of spokes different from one another (also as regards number of spokes in each group) in the same wheel.

Of course, without prejudice to the principle of the invention, the details of construction and embodiments may vary widely with respect to what is described and illustrated herein, without thereby departing from the scope of the present invention, as defined in the annexed claims.

For instance, in a preferred solution the distance (or chord or empty space) on the rim between the groups of spokes may be greater than the distance (or chord or full space) on the rim occupied by each individual group of spokes. In another solution, which is particularly preferred when the wheel has a small number of groups of spokes, the distance on the rim between the groups of spokes may be far greater than the distance on the rim occupied by each individual group of spokes.

## Claims

1. A spoked wheel for a bicycle, comprising
- a hub (2), having an axis (X) which defines the axis of the wheel;
- a rim (3);
- a plurality of spokes connecting the hub (2) to the rim (3) and arranged so as to define groups of spokes (R) on the rim, each group of spokes (R) comprising an odd number of spokes grouped together in such a way that the maximum distance on the rim between two adjacent spokes of the group is smaller than the distance on the rim between two adjacent groups; **characterized in that** at least two spokes of each group (R), viewed in the direction of the axis (X) of the wheel, cross over one another, said at least two spokes being connected to an axial portion of said hub (2) on one side of the hub (2) with respect to a plane orthogonal to the axis of the wheel.

2. The spoked wheel according to Claim 1, **characterized in that** each group (R) of spokes comprises one or more spokes (A) connected to a first portion (2a) of the hub (2) and said at least two spokes (B) are connected to a second portion (2b) of the hub, set at an axial distance apart from said first portion.

3. The spoked wheel according to Claim 2, **characterized in that** in each group of spokes, the spokes (A) connected to the first portion (2a) of the hub (2) are different in number from the spokes (B) connected to the second portion (2b) of the hub.

4. The spoked wheel according to Claim 1, **characterized in that** in each group of spokes the spoke (A) connected to the other side of the hub (2) is set in a radial plane of simmetry of the group.

5. The spoked wheel according to Claim 2, **characterized in that** the spokes crossing over one another, are connected both to the first portion (2a) and to the second portion (2b) of the hub.

6. The spoked wheel according to Claim 1, **characterized in that** the spokes crossing over one another are adjacent spokes.

7. The spoked wheel according to Claim 1, **characterized in that** the spokes of each group of spokes, viewed in the direction of the axis of the wheel, have an arrangement that is specular with respect to a radial plane of symmetry.

8. The spoked wheel according to Claim 7, **characterized in that**, in each group of spokes, the spokes connected at least to one of the two aforesaid portions of the hub are odd in number and include a spoke which, if viewed in the direction of the axis of the wheel, is set at the centre of the group, in said radial plane of symmetry.

9. The spoked wheel according to any one of the previous claims, **characterized in that** the tensile forces of the spokes of each group are substantially balanced with one another in the direction of the axis of the wheel.

10. The spoked wheel according to any one of the previous claims, **characterized in that** the tensile forces of the spokes of each group are substantially balanced with one another in a direction tangential with respect to the centre of the wheel and contained in a plane orthogonal to the axis of the wheel.

11. The spoked wheel according to any one of the previous claims, **characterized in that** three spokes of each group of spokes cross over one another all substantially at the same point, if viewed in the direction of the axis of the wheel.

12. The spoked wheel according to any one of the previous claims, **characterized in that** the groups of spokes on the rim are at equal distances apart from one another.

13. The spoked wheel according to Claim 1, **characterized in that** each group of spokes is constituted by a set of three spokes.

14. The spoked wheel according to Claim 13, **characterized in that**, in each set of three spokes, one spoke is connected to a first portion (2a) of the hub, and the other two spokes are connected to a second portion (2b) of the hub, set at an axial distance apart from said first portion.

15. The spoked wheel according to Claim 13, **characterized in that** the two spokes connected to the second portion of the hub, viewed in the direction of the axis of the wheel, are set symmetrically with respect to a radial plane passing through the axis of the wheel.

16. The spoked wheel according to Claim 14, **characterized in that** the spoke connected to the first portion of the hub extends in a radial plane containing the axis of the wheel.

17. The spoked wheel according to Claim 16, **characterized in that** the three spokes of each set of three spokes cross over one another all substantially at the same point, if viewed in the direction of the axis of the wheel.

18. The spoked wheel according to Claim 17, **characterized in that** the point of crossing-over of the spokes of each set of three spokes is radially nearer to the hub than to the rim.

19. The spoked wheel according to Claim 16, **characterized in that** the tensile forces of the spokes of each set of three spokes are substantially balanced with one another in the direction of the axis of the wheel.

20. The spoked wheel according to Claim 16, **characterized in that** the tensile forces of the spokes of each set of three spokes are substantially balanced with one another in a direction tangential with respect to the centre of the wheel and contained in a plane orthogonal to the axis of the wheel.

21. The spoked wheel according to Claim 16, **characterized in that** the spoke connected to the first portion of the hub and the two remaining spokes of each set of three spokes present different angles of inclination with respect to a median plane of the wheel.

22. The spoked wheel according to Claim 21, **characterized in that** the tensile forces of the spokes of each set of three spokes have their components in the direction of the axis of the wheel substantially balanced with one another.

23. The spoked wheel according to Claim 21, **characterized in that** the tensile forces of the spokes of each set of three spokes have their components in a direction tangential with respect to the centre of the wheel and contained in a plane perpendicular to the axis of the wheel substantially balanced with one another.

24. The spoked wheel according to Claim 21, **characterized in that** the tensile forces of the two spokes of each set of three spokes connected to the second portion of the hub are substantially equal to one another.

25. The spoked wheel according to Claim 21, **characterized in that** the sum of the tensile forces of the two spokes connected to the second portion of the hub and the tensile force of the spoke connected to the first portion have their components, lying in a plane containing the axis of the wheel, which are in a ratio with respect to one another that is substantially equal and inverse to the ratio of the sines of the respective angles of inclination with respect to said plane median.

26. The spoked wheel according to Claim 16, **characterized in that** it is a bicycle rear wheel and **in that** the sets of three spokes are oriented all with the radial spoke on the same side of the wheel, so that one side of the wheel has twice the number of spokes than the other side.

27. The spoked wheel according to Claim 26, **characterized in that** the side of the wheel with twice the number of spokes is the one corresponding to the end of the hub which bears the sprockets cassette.

28. The spoked wheel according to Claim 16, **characterized in that** it is a front wheel and **in that** the sets of three spokes are oriented alternately with the radial spoke connected alternately on one side and on the other side of the wheel.

29. The spoked wheel according to Claim 2, **characterized in that** the spokes connected to said first portion (2a) and to said second portion (2b) of the hub (2) have different camber angles (α, β) and **in that** each group of spokes has a number (*m*) of spokes connected to said first portion (2a) and a number (*n*) of spokes connected to said second portion (2b) such that the ratio (*m*/*n*) approximates substantially the inverse ratio (sinβ/sinα) of the sines of the respective camber angles.

30. The spoked wheel according to Claim 29, **characterized in that** the sum of the tensile forces of the spokes of the wheel connected to said first portion (2a) of the hub and the sum of the tensile forces of the spokes connected to said second portion (2b) of the hub are balanced with one another in the direction of the axis of the wheel.

## Patentansprüche

1. Speichenrad für ein Fahrrad, das umfasst:
eine Nabe (2) mit einer Achse (X), die die Achse des Rades bildet;
eine Felge (3);
eine Vielzahl von Speichen, die die Nabe (2) mit der Felge (3) verbinden und so angeordnet sind, dass sie Gruppen von Speichen (R) an der Felge bilden, wobei jede Gruppe von Speichen (R) eine ungerade Anzahl von Speichen umfasst, die so zusammengefasst sind, dass der maximale Abstand zwischen zwei benachbarten Speichen der Gruppe an der Felge kleiner ist als der Abstand zwischen zwei benachbarten Gruppen an der Felge,
**dadurch gekennzeichnet, dass** wenigstens zwei Speichen jeder Gruppe (R), in der Richtung der Achse (X) des Rades gesehen, einander überkreuzen, und die wenigstens zwei Speichen mit einem axialen Abschnitt der Nabe (2) an einer Seite der Nabe (2) in Bezug auf eine Ebene senkrecht zur Achse des Rades verbunden sind.

2. Speichenrad nach Anspruch 1, **dadurch gekennzeichnet, dass** jede Gruppe (R) von Speichen eine oder mehrere Speichen (A) umfasst, die mit einem ersten Abschnitt (2a) der Nabe (2) verbunden sind, und die wenigstens zwei Speichen (B) mit einem zweiten Abschnitt (2b) der Nabe verbunden sind, der in einem axialen Abstand zu dem ersten Abschnitt angeordnet ist.

3. Speichenrad nach Anspruch 2, **dadurch gekennzeichnet, dass** in jeder Gruppe von Speichen die Speichen (A), die mit dem ersten Abschnitt (2a) der Nabe (2) verbunden sind, sich hinsichtlich der Anzahl von den Speichen (B) unterscheiden, die mit dem zweiten Abschnitt (2b) der Nabe verbunden sind.

4. Speichenrad nach Anspruch 1, **dadurch gekennzeichnet, dass** in jeder Gruppe von Speichen die Speiche (A), die mit der anderen Seite der Nabe (2) verbunden ist, in einer radialen Symmetrieebene der Gruppe angeordnet ist.

5. Speichenrad nach Anspruch 2, **dadurch gekennzeichnet, dass** die Speichen, die einander überkreuzen, sowohl mit dem ersten Abschnitt (2a) als auch dem zweiten Abschnitt (2b) der Nabe verbunden sind.

6. Speichenrad nach Anspruch 1, **dadurch gekennzeichnet, dass** die Speichen, die einander überkreuzen, benachbarte Speichen sind.

7. Speichenrad nach Anspruch 1, **dadurch gekennzeichnet, dass** die Speichen jeder Gruppe von Speichen, in der Richtung der Achse des Rades gesehen, eine Anordnung haben, die in Bezug auf eine radiale Symmetrieebene spiegelbildlich ist.

8. Speichenrad nach Anspruch 7, **dadurch gekennzeichnet, dass** in jeder Gruppe von Speichen die Speichen, die mit wenigstens einem der zwei Abschnitte der Nabe verbunden sind, ungeradzahlig sind und eine Speiche enthalten, die, in der Richtung der Achse des Rades gesehen, in der Mitte der Gruppe in der radialen Symmetrieebene angeordnet ist.

9. Speichenrad nach einem der vorangehenden Ansprüche, **dadurch gekennzeichnet, dass** die Zugkräfte der Speichen jeder Gruppe im Wesentlichen in der Richtung der Achse des Rades miteinander im Gleichgewicht sind.

10. Speichenrad nach einem der vorangehenden Ansprüche, **dadurch gekennzeichnet, dass** die Zugkräfte der Speichen jeder Gruppe in einer Richtung tangential in Bezug auf die Mitte des Rades und in einer Ebene senkrecht zur Achse des Rades liegend, im Wesentlichen im Gleichgewicht miteinander sind.

11. Speichenrad nach einem der vorangehenden Ansprüche, **dadurch gekennzeichnet, dass** drei Speichen jeder Gruppe von Speichen, in der Richtung der Achse des Rades gesehen, einander sämtlich im Wesentlichen an dem gleichen Punkt überkreuzen.

12. Speichenrad nach einem der vorangehenden Ansprüche, **dadurch gekennzeichnet, dass** die Gruppen von Speichen an der Felge gleich weit voneinander beabstandet sind.

13. Speichenrad nach Anspruch 1, **dadurch gekennzeichnet, dass** jede Gruppe von Speichen durch einen Satz aus drei Speichen gebildet wird.

14. Speichenrad nach Anspruch 13, **dadurch gekennzeichnet, dass** in jedem Satz aus drei Speichen eine Speiche mit einem ersten Abschnitt (2a) der Nabe verbunden ist und die anderen zwei Speichen mit einem zweiten Abschnitt (2b) der Nabe verbunden sind, der in einem axialen Abstand zu dem ersten Abschnitt angeordnet ist.

15. Speichenrad nach Anspruch 13, **dadurch gekennzeichnet, dass** die zwei Speichen, die mit dem zweiten Abschnitt der Nabe verbunden sind, in der Richtung der Achse des Rades gesehen, symmetrisch in Bezug auf eine radiale Ebene angeordnet sind, die durch die Achse des Rades hindurch verläuft.

16. Speichenrad nach Anspruch 14, **dadurch gekennzeichnet, dass** die Speiche, die mit dem ersten Abschnitt der Nabe verbunden ist, sich in einer radialen Ebene erstreckt, die die Achse des Rades einschließt.

17. Speichenrad nach Anspruch 16, **dadurch gekennzeichnet, dass** die drei Speichen jedes Satzes aus drei Speichen, in der Richtung der Achse des Rades gesehen, einander sämtlich an dem gleichen Punkt kreuzen.

18. Speichenrad nach Anspruch 17, **dadurch gekennzeichnet, dass** der Punkt des Überkreuzens der Speichen jedes Satzes aus drei Speichen radial näher an der Nabe als an der Felge liegt.

19. Speichenrad nach Anspruch 16, **dadurch gekennzeichnet, dass** die Zugkräfte der Speichen jedes Satzes aus drei Speichen in der Richtung der Achse des Rades im Wesentlichen im Gleichgewicht miteinander sind.

20. Speichenrad nach Anspruch 16, **dadurch gekennzeichnet, dass** die Zugkräfte der Speichen jedes Satzes aus drei Speichen in einer Richtung tangential in Bezug auf die Mitte des Rades und in einer Ebene senkrecht zu der Achse des Rades eingeschlossen im Wesentlichen im Gleichgewicht miteinander sind.

21. Speichenrad nach Anspruch 16, **dadurch gekennzeichnet, dass** die Speiche, die mit dem ersten Abschnitt der Nabe verbunden ist, und die zwei verbleibenden Speichen jedes Satzes aus drei Speichen unterschiedliche Neigungswinkel in Bezug auf eine Mittelebene des Rades aufweisen.

22. Speichenrad nach Anspruch 21, **dadurch gekennzeichnet, dass** die Komponenten der Zugkräfte der Speichen jedes Satzes aus drei Speichen in der Richtung der Achse des Rades im Wesentlichen im Gleichgewicht miteinander sind.

23. Speichenrad nach Anspruch 21, **dadurch gekennzeichnet, dass** die Komponenten der Zugkräfte der Speichen jedes Satzes aus drei Speichen in einer Richtung tangential in Bezug auf die Mitte des Rades und in einer Ebene senkrecht zu der Achse des Rades eingeschlossen im Wesentlichen im Gleichgewicht miteinander sind.

24. Speichenrad nach Anspruch 21, **dadurch gekennzeichnet, dass** die Zugkräfte der zwei Speichen jedes Satzes aus drei Speichen, die mit dem zweiten Abschnitt der Nabe verbunden sind, einander im Wesentlichen gleich sind.

25. Speichenrad nach Anspruch 21, **dadurch gekennzeichnet, dass** die Komponenten der Summe der Zugkräfte der zwei Speichen, die mit dem zweiten Abschnitt der Nabe verbunden sind, und der Zugkraft der Speiche, die mit dem ersten Abschnitt verbunden ist, in einer Ebene liegen, die die Achse des Rades einschließt, und die in einem Verhältnis in Bezug zueinander sind, das im Wesentlichen dem Verhältnis der Sinusse der jeweiligen Neigungswinkel in Bezug auf die Mittelebene gleich und umgekehrt dazu ist.

26. Speichenrad nach Anspruch 16, **dadurch gekennzeichnet, dass** es ein Fahrradhinterrad ist und **dadurch**, dass die Sätze aus drei Speichen sämtlich so ausgerichtet sind, dass die radiale Speiche auf der gleichen Seite des Rades liegt, so dass eine Seite des Rades zweimal so viel Speichen hat wie die andere Seite.

27. Speichenrad nach Anspruch 26, **dadurch gekennzeichnet, dass** die Seite des Rades mit der doppelten Anzahl von Speichen die ist, die dem Ende der Nabe entspricht, das die Zahnkranzkassette trägt.

28. Speichenrad nach Anspruch 16, **dadurch gekennzeichnet, dass** es ein Vorderrad ist und dass die Sätze aus drei Speichen abwechselnd so ausgerichtet sind, dass die radiale Speiche abwechselnd an einer Seite und an der anderen Seite des Rades angebracht ist.

29. Speichenrad nach Anspruch 2, **dadurch gekennzeichnet, dass** die Speichen, die mit dem ersten Abschnitt (2a) und mit dem zweiten Abschnitt (2b) der Nabe (2) verbunden sind, unterschiedliche Radsturzwinkel (α, β) haben und dass jede Gruppe von Speichen eine solche Anzahl (m) von Speichen, die mit dem ersten Abschnitt (2a) verbunden sind, sowie eine solche Anzahl (n) von Speichen, die mit dem zweiten Abschnitt (2b) verbunden sind, hat, dass sich das Verhältnis (m/n) im Wesentlichen dem umgekehrten Verhältnis (sinβ/sinα) der Sinusse der jeweiligen Radsturzwinkel nähert.

30. Speichenrad nach Anspruch 29, **dadurch gekennzeichnet, dass** die Summe der Zugkräfte der Speichen des Rades, die mit dem ersten Abschnitt (2a) der Nabe verbunden sind, und die Summe der Zugkräfte der Speichen, die mit dem zweiten Abschnitt (2b) der Nabe verbunden sind, in der Richtung der Achse des Rades im Gleichgewicht miteinander sind.

## Revendications

1. Roue à rayons pour une bicyclette, comprenant :
un moyeu (2), ayant un axe (X) qui définit l'axe de la roue ;
une jante (3) ;
une pluralité de rayons raccordant le moyeu (2) à la jante (3) et agencés afin de définir des groupes de rayons (R) sur la jante, chaque groupe de rayons (R) comprenant un nombre impair de rayons groupés ensemble de sorte que la distance maximum sur la jante entre deux rayons adjacents du groupe est inférieure à la distance sur la jante entre deux groupes adjacents ; **caractérisée en ce qu'**au moins deux rayons de chaque groupe (R), observés dans la direction de l'axe (X) de la roue, se croisent, lesdits au moins deux rayons étant raccordés à une partie axiale dudit moyeu (2) d'un côté du moyeu (2) par rapport à un plan orthogonal à l'axe de la roue.

2. Roue à rayons selon la revendication 1, **caractérisée en ce que** chaque groupe (R) de rayons comprend un ou plusieurs rayons (A) raccordés à une première partie (2a) du moyeu (2) et au moins deux rayons (B) sont raccordés à une seconde partie (2b) du moyeu, éloignée selon une distance axiale de ladite première partie.

3. Roue à rayons selon la revendication 2, **caractérisée en ce que** dans chaque groupe de rayons, les rayons (A) raccordés à la première partie (2a) du moyeu (2) sont différents en nombre des rayons (B) raccordés à la seconde partie (2b) du moyeu.

4. Roue à rayons selon la revendication 1, **caractérisée en ce que** dans chaque groupe de rayons, le rayon (A) raccordé de l'autre côté du moyeu (2) est placé dans un plan de symétrie radial du groupe.

5. Roue à rayons selon la revendication 2, **caractérisée en ce que** les rayons qui se croisent, sont raccordés à la fois à la première partie (2a) et à la seconde partie (2b) du moyeu.

6. Roue à rayons selon la revendication 1, **caractérisée en ce que** les rayons qui se croisent sont des rayons adjacents.

7. Roue à rayons selon la revendication 1, **caractérisée en ce que** les rayons de chaque groupe de rayons, observés dans la direction de l'axe de la roue, ont un agencement qui est spéculaire par rapport à un plan de symétrie radial.

8. Roue à rayons selon la revendication 7, **caractérisée en ce que**, dans chaque groupe de rayons, les rayons raccordés au moins à l'une des deux parties mentionnées précédemment du moyeu, sont en nombre impair et comprennent un rayon qui, s'il est observé dans la direction de l'axe de la roue, est placé au centre du groupe, dans ledit plan de symétrie radial.

9. Roue à rayons selon l'une quelconque des revendications précédentes, **caractérisée en ce que** les forces de traction des rayons de chaque groupe sont sensiblement équilibrées entre elles dans la direction de l'axe de la roue.

10. Roue à rayons selon l'une quelconque des revendications précédentes, **caractérisée en ce que** les forces de traction des rayons de chaque groupe sont sensiblement équilibrées entre elles dans une direction tangentielle par rapport au centre de la roue et contenues dans un plan orthogonal à l'axe de la roue.

11. Roue à rayons selon l'une quelconque des revendications précédentes, **caractérisée en ce que** trois rayons de chaque groupe de rayons se croisent tous sensiblement au même point, s'ils sont observés dans la direction de l'axe de la roue.

12. Roue à rayons selon l'une quelconque des revendications précédentes, **caractérisée en ce que** les groupes de rayons sur la jante sont espacés à égale distance les uns des autres.

13. Roue à rayons selon la revendication 1, **caractérisée en ce que** chaque groupe de rayons est constitué par un ensemble de trois rayons.

14. Roue à rayons selon la revendication 13, **caractérisée en ce que**, dans chaque ensemble de trois rayons, un rayon est raccordé à une première partie (2a) du moyeu, et les deux autres rayons sont raccordés à une seconde partie (2b) du moyeu, éloignée selon une distance axiale de ladite première partie.

15. Roue à rayons selon la revendication 13, **caractérisée en ce que** les deux rayons raccordés à la seconde partie du moyeu, observés dans la direction de l'axe de la roue, sont placés symétriquement par rapport à un plan radial passant par l'axe de la roue.

16. Roue à rayons selon la revendication 14, **caractérisée en ce que** le rayon raccordé à la première partie du moyeu s'étend dans un plan radial contenant l'axe de la roue.

17. Roue à rayons selon la revendication 16, **caractérisée en ce que** les trois rayons de chaque ensemble de trois rayons se croisent tous sensiblement au même point, s'ils sont observés dans la direction de l'axe de la roue.

18. Roue à rayons selon la revendication 17, **caractérisée en ce que** le point de croisement des rayons de chaque ensemble de trois rayons est radialement plus proche du moyeu que de la jante.

19. Roue à rayons selon la revendication 16, **caractérisée en ce que** les forces de traction des rayons de chaque ensemble de trois rayons sont sensiblement équilibrées entre elles dans la direction de l'axe de la roue.

20. Roue à rayons selon la revendication 16, **caractérisée en ce que** les forces de traction des rayons de chaque ensemble de trois rayons sont sensiblement équilibrées entre elles dans une direction tangentielle par rapport au centre de la roue et contenues dans un plan orthogonal à l'axe de la roue.

21. Roue à rayons selon la revendication 16, **caractérisée en ce que** le rayon raccordé à la première partie du moyeu, et les deux rayons restants de chaque ensemble de trois rayons présentent différents angles d'inclinaison par rapport à un plan médian de la roue.

22. Roue à rayons selon la revendication 21, **caractérisée en ce que** les forces de traction des rayons de chaque ensemble de trois rayons ont leurs composantes dans la direction de l'axe de la roue sensiblement équilibrées entre elles.

23. Roue à rayons selon la revendication 21, **caractérisée en ce que** les forces de traction des rayons de chaque ensemble de trois rayons ont leurs composantes dans une direction tangentielle par rapport au centre de la roue et contenues dans un plan perpendiculaire à l'axe de la roue, sensiblement équilibrées entre elles.

24. Roue à rayons selon la revendication 21, **caractérisée en ce que** les forces de traction des deux rayons de chaque ensemble de trois rayons raccordés à la seconde partie du moyeu sont sensiblement égales entre elles.

25. Roue à rayons selon la revendication 21, **caractérisée en ce que** la somme des forces de traction des deux rayons raccordés à la seconde partie du moyeu et des forces de traction du rayon raccordé à la première partie ont leurs composantes, se trouvant dans un plan contenant l'axe de la roue, qui sont dans un rapport les unes par rapport aux autres qui est sensiblement égal et inverse au rapport des sinus des angles d'inclinaison respectifs par rapport audit plan médian.

26. Roue à rayons selon la revendication 16, **caractérisée en ce qu'**il s'agit d'une roue arrière de bicyclette et **en ce que** les ensembles de trois rayons sont tous orientés avec le rayon radial du même côté de la roue, de sorte qu'un côté de la roue a deux fois le nombre de rayons par rapport à l'autre côté.

27. Roue à rayons selon la revendication 26, **caractérisée en ce que** le côté de la roue avec deux fois le nombre de rayons est le côté correspondant à l'extrémité du moyeu qui supporte la cassette des pignons.

28. Roue à rayons selon la revendication 16, **caractérisée en ce qu'**il s'agit d'une roue avant et **en ce que** les ensembles de trois rayons sont orientés de manière alternée avec le rayon radial raccordé de manière alternée sur un côté et sur l'autre côté de la roue.

29. Roue à rayons selon la revendication 2, **caractérisée en ce que** les rayons raccordés à ladite première partie (2a) et à ladite seconde partie (2b) du moyeu (2) ont des angles de courbure différents (α, β) et **en ce que** chaque groupe de rayons a un nombre (m) de rayons raccordés à ladite première partie (2a) et un nombre (n) de rayons raccordés à ladite seconde partie (2b) de sorte que le rapport (m/n) se rapproche sensiblement du rapport inverse (sinβ/sinα) des sinus des angles de courbure respectifs.

30. Roue à rayons selon la revendication 29, **caractérisée en ce que** la somme des forces de traction des rayons de la roue raccordés à ladite première partie (2a) du moyeu et la somme des forces de traction des rayons raccordés à la seconde partie (2b) du moyeu sont équilibrées entre elles dans la direction de l'axe de la roue.
